# EUROPÄISCHE PATENTSCHRIFT

(11) **EP 3 873 757 B1**
(45) Veröffentlichungstag und Bekanntmachung des Hinweises auf die Patenterteilung: **16.08.2023**
(21) Anmeldenummer: 19795189.0
(22) Anmeldetag: 28.10.2019
(51) Int. Cl.: B60K 11/00, B60K 11/02, B60K 1/00, F01P 3/12, H01M 10/613, H01M 10/615, H01M 10/625, H01M 10/6568, H01M 10/663

(54) **HEIZ- ODER KÜHLMITTELKREISLAUF FÜR EIN ELEKTROFAHRZEUG**
HEATING OR COOLING MEDIUM CIRCUIT FOR AN ELECTRIC VEHICLE
CIRCUIT DE FLUIDE CHAUFFANT OU DE RÉFRIGÉRANT POUR UN VÉHICULE ÉLECTRIQUE

(30) Priorität: 29.10.2018 DE 102018218474
(43) Veröffentlichungstag der Anmeldung: 08.09.2021
(73) Patentinhaber: Robert Bosch GmbH, 70442 Stuttgart (DE)
(72) Erfinder: SCHINDELE, Lothar, 71272 Renningen (DE); HEBER, Frank, 88480 Achstetten (DE); SCHUETZ, David, 71254 Ditzingen-Hirschlanden (DE); TSCHISMAR, Oliver, 72555 Metzingen (DE); SAILER, Patrick, 75365 Calw (DE); KLUENDER, Mario, 70567 Stuttgart (DE)
(86) Internationale Anmeldenummer: PCT/EP2019/079362
(87) Internationale Veröffentlichungsnummer: WO 2020/089152

(56) Entgegenhaltungen:
- WO-A1-2011/029538
- DE-A1-102013 217 656
- DE-A1-102017 011 430
- US-A- 5 678 760

## Beschreibung

Die Erfindung betrifft ein Heiz- oder Kühlmittelkreislauf für ein Elektrofahrzeug nach dem unabhängigen Vorrichtungsanspruch. Ferner betrifft die Erfindung ein entsprechendes Elektrofahrzeug nach dem nebengeordneten unabhängigen Vorrichtungsanspruch.

### Stand der Technik

Zunehmend werden in mobilen Anwendungen Batterien mit angehobenem Temperaturniveau von z. B. 40 bis 100 °C verwendet. Bei solchen Batterien stellt die Temperierung (Heizen oder Kühlen) der Batterien eine Herausforderung dar, da die Batterien hohen Temperaturschwankungen ausgesetzt sind. Dazu kommt noch, dass solche Batterien einerseits eine große Reichweite ermöglichen sollen und andererseits lange Stand-By-Zeiten aufweisen können.

US 5 678 760 A offenbart einen Heiz- oder Kühlmittelkreislauf für ein Elektrofahrzeug.

### Offenbarung der Erfindung

Die Erfindung sieht gemäß einem ersten Aspekt einen Heiz- oder Kühlmittelkreislauf für ein Elektrofahrzeug mit den Merkmalen des unabhängigen Vorrichtungsanspruches vor. Ferner sieht die Erfindung gemäß einem zweiten Aspekt ein entsprechendes Elektrofahrzeug mit den Merkmalen des nebengeordneten unabhängigen Vorrichtungsanspruches vor. Weitere Vorteile, Merkmale und Details der Erfindung ergeben sich aus den Unteransprüchen, der Beschreibung und den Zeichnungen. Dabei gelten Merkmale und Details, die im Zusammenhang mit dem erfindungsgemäßen Heiz- oder Kühlmittelkreislauf beschrieben sind, selbstverständlich auch im Zusammenhang mit dem erfindungsgemäßen Elektrofahrzeug und jeweils umgekehrt, sodass bezüglich der Offenbarung zu den einzelnen Erfindungsaspekten stets wechselseitig Bezug genommen wird bzw. werden kann.

Die vorliegende Erfindung stellt ein Heiz- oder Kühlmittelkreislauf für ein Elektrofahrzeug bereit, aufweisend: einen Basiskreislauf zum Temperieren eines Elektromotors und einer Batterie des Elektrofahrzeuges, wobei im Basiskreislauf eine Hauptpumpe vorgesehen ist, um ein Kühlmittel durch den Basiskreislauf zu befördern, eine Bypassleitung, um das Kühlmittel vorbei an der Batterie fließen zu lassen, und einen wärmeisolierten Hilfskreislauf für die Batterie, um die Batterie unabhängig von dem Elektromotor zu temperieren.

Das Temperieren der Batterie heißt im Sinne der Erfindung, die Batterie zu heizen und/oder zu kühlen. Mit anderen Worten wird die Batterie beim Temperieren im Sinne der Erfindung bei Bedarf geheizt (oder aufgewärmt), gekühlt oder auf einer bestimmten Temperatur warm gehalten.

Der erfindungsgemäße Basiskreislauf kann zum Temperieren nur des Elektromotors unabhängig von der Batterie oder zum Temperieren des Elektromotors und der Batterie zusammen betrieben werden. Mithilfe des Basiskreislaufes kann die Abwärme des Elektromotors zum Temperieren der Batterie genutzt werden.

Die erfindungsgemäße Bypassleitung kann dazu dienen, den Elektromotor unabhängig von der Batterie zu temperieren.

Der erfindungsgemäße Hilfskreislauf ist unabhängig von der Bypassleitung ausgebildet. Der Hilfskreislauf ist wärmeisoliert von dem Basiskreislauf. Wärmeisoliert heißt, dass der Hilfskreislauf unabhängig von dem Basiskreislauf betreibbar ist, ohne die Wärme mit dem Basiskreislauf auszutauschen. Der Hilfskreislauf weist Mittel auf, bspw. in Form einer Pumpe, die den Fluss des Kühlmittels durch den Hilfskreislauf unabhängig von der Hauptpumpe im Basiskreislauf ermöglichen. Der erfindungsgemäße Hilfskreislauf kann dazu dienen, die Batterie unabhängig von dem Elektromotor zu erwärmen oder auf einem bestimmten Temperaturniveau zu halten. Gemäß der Erfindung kann der Hilfskreislauf außerdem dazu dienen, die Batterie unabhängig von dem Elektromotor zu kühlen.

Als Kühlmittel im Rahmen der Erfindung kann vorzugsweise ein flüssiges Kühlmittel genutzt werden.

Der Erfindungsgedanke liegt dabei darin, dass für die Batterie ein separater Hilfskreislauf, ein sog. kleiner Kreislauf, bereitgestellt wird, um die Batterie unabhängig von dem Elektromotor temperieren zu können. Im Betrieb der Batterie sind Situationen denkbar, bei denen die Batterie auf eine geeignete Betriebstemperatur temperiert werden muss, ohne dass der Elektromotor einer Temperierung bedarf. Solche Situationen sind bspw. bei einem Kaltstart, wenn nur die Batterie aufgewärmt werden muss, oder bei einem Laden der Batterie im Stillstand des Elektromotors denkbar, wenn nur die Batterie gekühlt werden muss. In solchen Situationen ist es aus energetischer Sicht ungünstig, die Hauptpumpe im Basiskreislauf zu betreiben, weil dabei die parasitären Energieverluste für den Betrieb der Hauptpumpe zu groß sind. Bei einem Kaltstart sollte die Energie der Batterie jedoch möglichst für den Antrieb des Elektromotors verwendet werden. Wiederum beim Laden der Batterie im Stillstand des Elektromotors sollte die Ladezeit nicht unnötig verlängert werden. Mithilfe des Hilfskreislaufes kann somit ein autonomer Kreislauf zum Temperieren der Batterie geschaffen werden, der keinen so großen Druckabfall wie der Basiskreislauf bedingt und der eine kleinere Pumpe als die Hauptpumpe benötigt. Dazu kommt noch, dass der Elektromotor, der zumeist eine hohe thermische Kapazität aufweist, nicht mitgeheizt oder nicht mitgekühlt werden muss, was in oben beschriebenen Situationen die Dauer zum Temperieren der Batterie auf eine geeignete Temperatur reduziert und die Effizienz beim Temperieren der Batterie erheblich erhöht.

Vorteilhafterweise kann mithilfe des erfindungsgemäßen Heiz- oder Kühlmittelkreislaufes die Abwärme des Elektromotors und/oder der Batterie anderweitig genutzt werden, bspw. zum Heizen der Luft in einer Fahrzeugkabine.

Bei einem Heiz- und Kühlmittelkreislauf im Rahmen der Erfindung kann eine Steuereinheit vorgesehen sein, die die Temperaturen an Objekten und/oder in Leitungen des erfindungsgemäßen Heiz- oder Kühlmittelkreislaufes erfasst und die Aktoren, wie z. B. Pumpen und Ventile, entsprechend ansteuert.

Ferner sieht die Erfindung bei einem Heiz- oder Kühlmittelkreislauf vor, dass im wärmeisolierten Hilfskreislauf eine Hilfspumpe vorgesehen ist, um das Kühlmittel durch den wärmeisolierten Hilfskreislauf zu befördern oder mit anderen Worten umzuwälzen. Somit kann der Fluss des Kühlmittels durch den Hilfskreislauf autonom, d. h. unabhängig von der Hauptpumpe im Basiskreislauf realisiert werden. Die Hilfspumpe kann kleiner dimensioniert werden als die Hauptpumpe. Somit kann der Energieverbrauch beim Betreiben der Hilfspumpe und somit beim Temperieren der Batterie reduziert werden.

Weiterhin sieht die Erfindung bei einem Heiz- oder Kühlmittelkreislauf vor, dass eine Hilfspumpe im wärmeisolierten Hilfskreislauf in Strömungsrichtung des Kühlmittels gesehen stromabwärts nach der Batterie angeordnet ist. Somit kann die Hilfspumpe ausgeschaltet bleiben, wenn die Hauptpumpe arbeitet, um den Elektromotor und die Batterie zu temperieren.

Des Weiteren kann die Erfindung bei einem Heiz- oder Kühlmittelkreislauf vorsehen, dass der wärmeisolierte Hilfskreislauf eine Elektroheizung aufweist.

Die Elektroheizung kann dazu dienen, die Batterie zu erwärmen, wenn die Abwärme des Elektromotors hierzu nicht zur Verfügung steht.

Zudem ist es im Rahmen der Erfindung denkbar, dass eine Elektroheizung im wärmeisolierten Hilfskreislauf in Strömungsrichtung des Kühlmittels gesehen stromabwärts nach der Batterie angeordnet ist. Somit kann die Elektroheizung beim Betreiben des Hilfskreislaufes zum Einsatz kommen. Beim Betreiben des Basiskreislaufes soll primär die Abwärme des Elektromotors zum Aufwärmen der Batterie, soweit nötig, genutzt werden.

Außerdem kann die Erfindung bei einem Heiz- oder Kühlmittelkreislauf vorsehen, dass der wärmeisolierte Hilfskreislauf ein Zwei-Wege-Ventil aufweist. Mithilfe des Zwei-Wege-Ventils kann der Fluss des Kühlmittels durch den Hilfskreislauf zugelassen oder verhindert werden.

Ferner ist es im Rahmen der Erfindung denkbar, dass ein Zwei-Wege-Ventil im wärmeisolierten Hilfskreislauf in Strömungsrichtung des Kühlmittels gesehen stromabwärts nach der Batterie angeordnet ist. Somit wird der Fluss des Kühlmittels im Basiskreislauf durch das Zwei-Wege-Ventil im Hilfsreislauf nicht beeinträchtigt.

Weiterhin kann die Erfindung bei einem Heiz- oder Kühlmittelkreislauf vorsehen, dass im Basiskreislauf außerhalb des wärmeisolierten Hilfskreislaufes oder im Basiskreislauf in einer gemeinsamen Leitung mit dem wärmeisolierten Hilfskreislauf ein Kühler vorgesehen ist, der in Strömungsrichtung des Kühlmittels gesehen stromabwärts nach der Batterie angeordnet ist. Mithilfe des Kühlers kann die Abwärme des Elektromotors und/oder der Batterie an die Umgebung abgegeben werden. Wenn der Kühler im Basiskreislauf außerhalb der Hilfskreislaufes angeordnet ist, kann der erfindungsgemäße Heiz- oder Kühlmittelkreislauf leicht und ohne große Umbaumaßnahmen sogar an bekannten Heiz- oder Kühlkreisläufen aufgerüstet werden, die bereits einen Kühler im Basiskreislauf aufweisen. Zum Aufrüsten müsste demnach dem bekannten Heiz- oder Kühlkreislauf der Hilfskreislauf ohne einen Kühler zugeschaltet werden. Wenn der Kühler im Basiskreislauf in einer gemeinsamen Leitung mit dem wärmeisolierten Hilfskreislauf angeordnet ist, ist es vorteilhaft, dass der Hilfskreislauf nicht nur zum Heizen, sondern auch zum Kühlen der Batterie, bspw. beim Laden der Batterie, autonom, d. h. unabhängig von dem Basiskreislauf, betrieben werden kann. Der Kühler kann in einer Zweigleitung angeordnet sein, die mithilfe eines Drei-Wege-Ventils parallel zum Basiskreislauf oder zum wärmeisolierten Hilfskreislauf zu- oder abschaltbar ist.

Des Weiteren kann die Erfindung bei einem Heiz- oder Kühlmittelkreislauf vorsehen, dass der Basiskreislauf und der wärmeisolierte Hilfskreislauf eine gemeinsame Leitung aufweisen, durch welche nur die Batterie durchströmt wird oder durch welche nur die Batterie und ein Kühler durchströmt werden. Somit kann die Batterie auf eine einfache Art und Weise durch den Basiskreislauf und durch den Hilfskreislauf durchströmt werden.

Zudem kann die Erfindung bei einem Heiz- oder Kühlmittelkreislauf vorsehen, dass der wärmeisolierte Hilfskreislauf eine Funktionsleitung aufweist, durch welche mindestens eines der folgenden Elemente durchströmt wird: eine Hilfspumpe, eine Elektroheizung und/oder ein Zwei-Wege-Ventil. Somit kann ein autonomer Kreislauf bereitgestellt werden, mit welchem die Batterie schnell und effizient temperiert werden kann.

Außerdem kann die Erfindung bei einem Heiz- oder Kühlmittelkreislauf vorsehen, dass im Basiskreislauf ein Wärmeübertrager angeordnet ist, um die Abwärme des Elektromotors und/oder der Batterie in eine Fahrzeugkabine zu übertragen. Somit kann der Vorteil erreicht werden, dass die Wärmeeffizienz innerhalb des Elektrofahrzeuges und die Funktionalität des erfindungsgemäßen Heiz- oder Kühlmittelkreislaufes erhöht wird. Zugleich können dadurch Energieverluste reduziert werden, die beim Betreiben einer separaten Klimaanlage, umfassend eine Kabinenheizung und/oder einen Heiz- oder Kältemittelkreislauf, zum Klimatisieren einer Fahrzeugkabine entstehen.

Ferner kann die Erfindung bei einem Heiz- oder Kühlmittelkreislauf vorsehen, dass ein Wärmeübertrager im Basiskreislauf in Strömungsrichtung des Kühlmittels gesehen stromabwärts nach der Batterie und nach der Bypassleitung angeordnet ist. Der Wärmeübertrager kann dabei unabhängig von einer separaten Klimaanlage zum Temperieren einer Fahrzeugkabine vorgesehen sein. Der Wärmeübertrager kann alleine oder zusammen mit der separaten Klimaanlage die Wärmeenergie in die Fahrzeugkabine abgeben. Zum Übertragen der Wärme in die Fahrzeugkabine kann der Wärmeübertrager und/oder eine Kabinenheizung mit einem zweiten Luftstrom (anders genannt Kabinen-Luftstrom) durchströmt werden, um die Wärme indirekt auf die Luft in der Fahrzeugkabine zu übertragen. Hierzu kann ein gemeinsamer zweiter Lüfter, bspw. in Form eines Gebläses, vorgesehen sein.

Weiterhin kann die Erfindung bei einem Heiz- oder Kühlmittelkreislauf vorsehen, dass der Basiskreislauf eine Übertragungsleitung aufweist, in welcher ein Wärmeübertrager angeordnet ist. Die Übertragungsleitung kann zusammen mit dem Wärmeübertrager mithilfe eines Zwei-Wege-Ventils parallel zum Basiskreislauf zu- oder abgeschaltet werden. Somit kann ein bedarfsorientierter und effizienter Einsatz des Wärmeübertragers realisiert werden.

Des Weiteren sieht die Erfindung vor, dass im Basiskreislauf eine zweite Bypassleitung vorgesehen ist, in welcher ein Ladegerät für die Batterie angeordnet ist, um das Kühlmittel vorbei am Elektromotor fließen zu lassen. Dies kann von Vorteil sein, wenn die Batterie aufgeladen wird, weil somit das Kühlmittel nicht durch den Elektromotor geleitet werden muss. Somit können Druck- und Wärmesenken am Elektromotor verhindert werden.

Zudem sieht die Erfindung ein Elektrofahrzeug vor, welches mit einem Heiz- oder Kühlmittelkreislauf ausgeführt ist, welches wie oben beschrieben ausgeführt werden kann. Mithilfe des Elektrofahrzeuges werden die gleichen Vorteile erreicht, die oben im Zusammenhang mit dem erfindungsgemäßen Heiz- oder Kühlmittelkreislauf beschrieben wurden. Auf diese Vorteile wird vorliegend vollumfänglich Bezug genommen.

Im Rahmen eines Elektrofahrzeuges im Sinne der Erfindung kann vorgesehen sein, dass ein Heiz- oder Kältemittelkreislauf zum Klimatisieren einer Fahrzeugkabine(umfassend Heizen und/oder Kühlen und/oder Befeuchten und/oder Trocknen der Kabinenluft) vorgesehen ist, wobei der Heiz- oder Kühlmittelkreislauf zum Temperieren des Elektromotors und/oder der Batterie des Elektrofahrzeuges und der Heiz- oder Kältemittelkreislauf zum Klimatisieren der Fahrzeugkabine thermisch indirekt über einen ersten Luftstrom verbunden sind. Dieser erste Luftstrom kann dazu dienen, die Abwärme im Betrieb des Heiz- oder Kältemittelkreislaufes und/oder des Heiz- oder Kühlmittelkreislaufes an die Umgebung zu dissipieren. Zum Erzeugen des ersten Luftstromes kann ein erster Lüfter, bspw. in Form eines Gebläses, vorgesehen sein. Ein gemeinsamer Lüfter für beide Kreisläufe kann helfen, den Energiebedarf im Elektrofahrzeug zu senken.

Bei dem Heiz- oder Kältemittelkreislauf zum Klimatisieren einer Fahrzeugkabine im Sinne der Erfindung kann ein Kältemittelkreislauf verstanden werden, in welchem ein Kältemittel zyklisch einem Phasenübergang (flüssig/gasförmig) oder umgekehrt unterzogen wird. Dabei nutzt der Heiz- oder Kältemittelkreislauf die Kondensationswärme eines gasförmigen Kältemittels, das verflüssigt wird, um die Kabinenluft aufzuwärmen.

Bei dem Heiz- oder Kühlmittelkreislauf zum Temperieren des Elektromotors und/oder der Batterie des Elektrofahrzeuges wird durchgehend ein flüssiges Kühlmittel verwendet.

Außerdem kann die Erfindung bei einem Elektrofahrzeug vorsehen, dass der Heiz- oder Kühlmittelkreislauf einen Kühler aufweist und dass der Heiz- oder Kältemittelkreislauf einen Kompressor aufweist, wobei der Wärmeübertrager und der Kompressor durch einen ersten Luftstrom durchströmt werden, und/oder dass ein Gebläse vorgesehen ist, um einen ersten Luftstrom zu erzeugen. Somit können der Kühler und der Kompressor durch den gleichen ersten Luftstrom effizient gekühlt werden. Hierzu braucht nur ein gemeinsamer erster Lüfter, bspw. in Form eines Gebläses, vorgesehen sein.

Bevorzugte Ausführungsbeispiele:
Die Erfindung sowie deren Weiterbildungen sowie deren Vorteile werden nachfolgend anhand von Zeichnungen näher erläutert. Es zeigen jeweils schematisch:
- Fig. 1: eine beispielhafte Ausführung eines Heiz- oder Kühlmittelkreislaufes im Sinne der Erfindung und
- Fig. 2: eine weitere beispielhafte Ausführung eines Heiz- oder Kühlmittelkreislaufes im Sinne der Erfindung.
In den unterschiedlichen Figuren sind gleiche Teile der Erfindung stets mit denselben Bezugszeichen versehen, weshalb diese in der Regel nur einmal beschrieben werden.

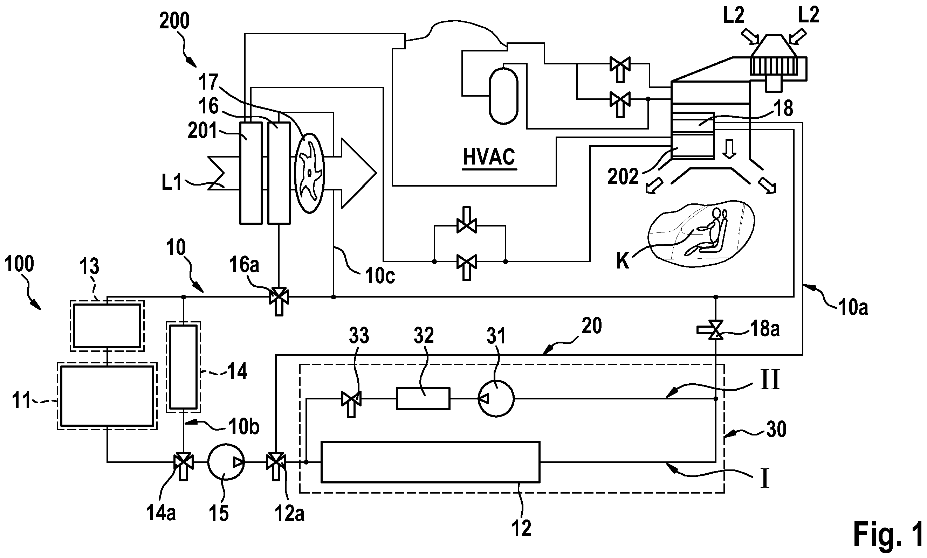

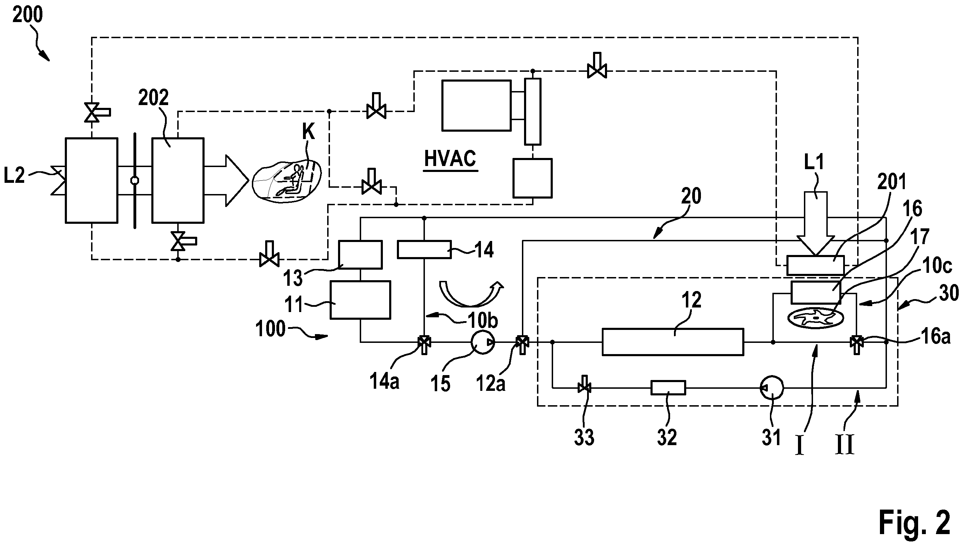

In den Figuren 1 und 2 ist ein Heiz- oder Kühlmittelkreislauf 100 für ein Elektrofahrzeug abgebildet, der einen Basiskreislauf 10 zum Temperieren eines Elektromotors 11 und einer Batterie 12 des Elektrofahrzeuges aufweist, wobei im Basiskreislauf 10 eine Hauptpumpe 15 vorgesehen ist, um ein, vorzugsweise flüssiges, Kühlmittel durch den Basiskreislauf 10 zu befördern. Das Elektrofahrzeug als Ganzes ist aus einfachheitsgründen nicht dargestellt.

Ferner weist der erfindungsgemäße Heiz- oder Kühlmittelkreislauf 100 eine Bypassleitung 20 auf, um das Kühlmittel vorbei an der Batterie 12 fließen zu lassen, wenn nur der Elektromotor 11 (oder der Elektromotor 11 und ein Wärmeübertrager 18 in einer Fahrzeugkabine K) temperiert werden muss. Die Bypassleitung kann mithilfe eines Drei-Wege-Ventils 12a zu- oder abgeschaltet werden.

Weiterhin weist der erfindungsgemäße Heiz- oder Kühlmittelkreislauf 100 einen wärmeisolierten Hilfskreislauf 30 für die Batterie 12 auf, um die Batterie 12 unabhängig von dem Elektromotor 11 zu temperieren.

In der Figur 1 ist ein Ausführungsbeispiel des erfindungsgemäßen Heiz- oder Kühlmittelkreislaufes 100 gezeigt, bei dem der Hilfskreislauf 30 unabhängig von dem Basiskreislauf 10 zum Heizen der Batterie 12 ausgelegt ist. Dabei ist ein Kühler 16 im Basiskreislauf 10 außerhalb des Hilfskreislaufes 30 angeordnet.

In der Figur 2 ist ein weiteres Ausführungsbeispiel des erfindungsgemäßen Heiz- oder Kühlmittelkreislaufes 100 gezeigt, bei dem der Hilfskreislauf 30 unabhängig von dem Basiskreislauf 10 sowohl zum Heizen als auch zum Kühlen der Batterie 12 ausgelegt ist. Dabei ist ein Kühler 16 in einer gemeinsamen Leitung I des Basiskreislaufes 10 mit dem Hilfskreislauf 30 angeordnet.

Der Kühler 16 kann in einer Zweigleitung 10c angeordnet sein, die mithilfe eines Drei-Wege-Ventils 16a parallel zum Basiskreislauf 10 (s. die Figur 1) oder zum wärmeisolierten Hilfskreislauf 30 (s. die Figur 2) zu- oder abschaltbar ist.

Der erfindungsgemäße Basiskreislauf 10 kann gemäß den Figuren 1 und 2 zum Temperieren nur des Elektromotors 11 unabhängig von der Batterie 12 oder zum Temperieren des Elektromotor 11 und der Batterie 12 zusammen betrieben werden. Mithilfe des Basiskreislaufes 10 kann gemäß den Figuren 1 und 2 die Abwärme des Elektromotors 11 für die Temperierung der Batterie 12 genutzt werden.

Mithilfe des erfindungsgemäßen Heiz- oder Kühlmittelkreislaufes 100 kann gemäß der Figur 1 die Abwärme des Elektromotors 11 und/oder der Batterie 12 anderweitig genutzt werden, vorzugsweise zum Heizen der Luft in einer Fahrzeugkabine K. Hierzu kann im Basiskreislauf 10 ein Wärmeübertrager 18 angeordnet sein, um die Abwärme des Elektromotors 11 und/oder der Batterie 12 in die Fahrzeugkabine K zu übertragen. Der Wärmeübertrager 18 ist im Basiskreislauf 10 in Strömungsrichtung des Kühlmittels gesehen stromabwärts nach der Batterie 12 und nach der Bypassleitung 20 angeordnet. Der Wärmeübertrager 18 kann dabei unabhängig von einer separaten Klimaanlage HVAC zum Klimatisieren der Fahrzeugkabine K dienen. Der Wärmeübertrager 18 kann dabei alleine oder zusammen mit der separaten Klimaanlage HVAC die Wärmeenergie in die Fahrzeugkabine K abgeben. Zum Übertragen der Wärme in die Fahrzeugkabine K kann der Wärmeübertrager 18 und/oder eine Kabinenheizung 202 mit einem zweiten Luftstrom (anders genannt Kabinen-Luftstrom L2) durchströmt werden. Der Wärmeübertrager 18 ist in einer Übertragungsleitung 10a angeordnet, die mithilfe eines Zwei-Wege-Ventils 18a parallel zum Basiskreislauf 10 zu- oder abgeschaltet werden.

Die erfindungsgemäße Bypassleitung 20 kann dazu dienen, den Elektromotor 11 unabhängig von der Batterie 12 zu temperieren.

Der erfindungsgemäße Hilfskreislauf 30 ist separat von der Bypassleitung 20 ausgebildet. Wie es aus den Figuren 1 und 2 erkenntlich ist, verläuft der erfindungsgemäße Hilfskreislauf 30 parallel zu der Bypassleitung 20. Der Hilfskreislauf 30 ist vorteilhafterweise wärmeisoliert von dem Basiskreislauf 10. D. h., dass der Hilfskreislauf 30 unabhängig von dem Basiskreislauf 10 betreibbar ist, ohne die Wäre mit dem Basiskreislauf 10 auszutauschen.

Wie es ferner die Figuren 1 und 2 zeigen, weist der Hilfskreislauf 30 eine im Vergleich zu der Hauptpumpe 15 kleiner ausgelegte Hilfspumpe 31 auf, die den Fluss des Kühlmittels durch den Hilfskreislauf 30 unabhängig von der Hauptpumpe 15 im Basiskreislauf 10 ermöglicht.

Die Ausführungsformen des erfindungsgemäßen Heiz- oder Kühlmittelkreislaufes 100 gemäß den Figuren 1 und 2 sind bei einem Kaltstart vorteilhaft, weil nur die Hilfspumpe 31 betrieben werden muss, wenn nur die Batterie 12 aufgewärmt werden muss.

Die Ausführungsform des erfindungsgemäßen Heiz- oder Kühlmittelkreislaufes 100 gemäß der Figur 2 ist beim Laden der Batterie 12 im Stillstand des Elektromotors 11 vorteilhaft, weil nur die Hilfspumpe 31 betrieben werden muss, wenn nur die Batterie 12 gekühlt werden muss.

Mithilfe der Erfindung können Energieverluste beim Temperieren der Batterie 12 unabhängig von dem Elektromotor 11 reduziert werden, weil die Hauptpumpe 15 nicht betrieben werden muss, und weil der Elektromotor 11, der zumeist eine hohe thermische Kapazität aufweist, nicht mitgeheizt oder nicht mitgekühlt werden muss.

Bei einem Heiz- und Kühlmittelkreislauf 100 kann eine schematisch dargestellte Steuereinheit 13 mit einer Leistungselektronik vorgesehen sein, die die Temperaturen an entsprechenden Objekten und/oder in entsprechenden Leitungen erfassen und Aktoren wie Pumpen und Ventile ansteuern kann. Wie es die Figuren 1 und 2 zeigen, kann die Steuereinheit 13 im Basiskreislauf 10 in Strömungsrichtung des Kühlmittels gesehen vor dem Elektromotor 11 angeordnet sein.

Wie es aus den Figuren 1 und 2 ersichtlich ist, ist die Hilfspumpe 31 im wärmeisolierten Hilfskreislauf 30 in Strömungsrichtung des Kühlmittels gesehen stromabwärts nach der Batterie 12 angeordnet ist. Weiterhin stromabwärts kann eine Elektroheizung 32 vorgesehen sein, um die Batterie 12 zu erwärmen, wenn die Abwärme des Elektromotors 11 hierzu nicht zur Verfügung steht.

Zudem zeigen die Figuren 1 und 2, dass der wärmeisolierte Hilfskreislauf 30 ein Zwei-Wege-Ventil 33, vorzugsweise in Strömungsrichtung des Kühlmittels gesehen stromabwärts nach der Batterie 12 und ggf. nach der Elektroheizung 32, aufweisen kann, um den Fluss des Kühlmittels durch den wärmeisolierten Hilfskreislauf 30 zuzulassen oder zu verhindern.

Außerdem zeigen die Figuren 1 und 2, dass der Basiskreislauf 10 und der wärmeisolierte Hilfskreislauf 30 eine gemeinsame Leitung I aufweisen. Durch die gemeinsame Leitung I kann nur die Batterie 12 (s. die Figur 1) oder die Batterie 12 und ein Kühler 16 (s. die Figur 2) durchströmt werden.

Zudem zeigen die Figuren 1 und 2, dass der wärmeisolierte Hilfskreislauf 30 eine Funktionsleitung II aufweist, durch welche mindestens eines der folgenden Elemente 31, 32, 33 durchströmt wird: eine Hilfspumpe 31, eine Elektroheizung 32 und/oder ein Zwei-Wege-Ventil 33.

Ferner zeigen die Figuren 1 und 2, dass im Basiskreislauf 10 eine zweite Bypassleitung10b vorgesehen sein kann, in welcher ein Ladegerät 14 für die Batterie 12 angeordnet sein kann. Somit können das Ladegerät 14 und die Batterie 12 ohne den Elektromotor 11, bspw. beim Laden der Batterie 12, gekühlt werden. Die zweite Bypassleitung10b kann mithilfe eines Drei-Wege-Ventils 14a zu- oder abgeschaltet werden.

Weiterhin zeigen die Figuren 1 und 2, kann der Heiz- oder Kühlmittelkreislauf 100 im Sinne der Erfindung thermisch indirekt an ein Heiz- oder Kältemittelkreislauf 200 zum Klimatisieren der Fahrzeugkabine K angebunden werden. Die thermisch indirekte Anbindung kann über einen ersten Luftstrom L1 erfolgen. Der erste Luftstrom L1 durchströmt den Kühler 16 des Heiz- oder Kühlmittelkreislauf 100 und einen Kondensator 201 des Heiz- und Kältemittelkreislaufes 200 und führt die Abwärme an die Umgebung ab. Zum Erzeugen des ersten Luftstromes kann ein erster Lüfter 17, bspw. in Form eines Gebläses, vorgesehen sein. Ein gemeinsamer erster 17 Lüfter für beide Kreisläufe kann helfen, den Energiebedarf im Elektrofahrzeug zu senken.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

Der Rahmen der Erfindung ist nur durch den Schutzumfang der beigefügten Ansprüche definiert.

## Patentansprüche

1. Heiz- oder Kühlmittelkreislauf (100) für ein Elektrofahrzeug, aufweisend:
einen Basiskreislauf (10) zum Temperieren eines Elektromotors (11) und einer Batterie (12) des Elektrofahrzeuges,
wobei im Basiskreislauf (10) eine Hauptpumpe (15) vorgesehen ist, um ein Kühlmittel durch den Basiskreislauf (10) zu befördern,
eine Bypassleitung (20), um das Kühlmittel vorbei an der Batterie (12) fließen zu lassen,
und einen wärmeisolierten Hilfskreislauf (30) für die Batterie (12), um die Batterie (12) unabhängig von dem Elektromotor (11) zu temperieren,
**dadurch gekennzeichnet, dass**
im wärmeisolierten Hilfskreislauf (30) eine Hilfspumpe (31) vorgesehen ist, um das Kühlmittel durch den wärmeisolierten Hilfskreislauf (30) zu befördern, und/oder
dass eine Hilfspumpe (31) im wärmeisolierten Hilfskreislauf (30) in Strömungsrichtung des Kühlmittels gesehen stromabwärts nach der Batterie (12) angeordnet ist und wobei
im Basiskreislauf (10) eine zweite Bypassleitung (10b) vorgesehen ist, in welcher ein Ladegerät (14) für die Batterie angeordnet ist, um das Kühlmittel vorbei am Elektromotor (11) fließen zu lassen.

2. Heiz- oder Kühlmittelkreislauf (100) nach Anspruch 1,
**dadurch gekennzeichnet,**
**dass** der wärmeisolierte Hilfskreislauf (30) eine Elektroheizung (32) aufweist, und/oder dass eine Elektroheizung (32) im wärmeisolierten Hilfskreislauf (30) in Strömungsrichtung des Kühlmittels gesehen stromabwärts nach der Batterie (12) angeordnet ist.

3. Heiz- oder Kühlmittelkreislauf (100) nach einem der vorhergehenden Ansprüche,
**dadurch gekennzeichnet,**
**dass** der wärmeisolierte Hilfskreislauf (30) ein Zwei-Wege-Ventil (33) aufweist, und/oder dass ein Zwei-Wege-Ventil (33) im wärmeisolierten Hilfskreislauf (30) in Flussrichtung des Kühlmittels gesehen stromabwärts nach der Batterie (12) angeordnet ist.

4. Heiz- oder Kühlmittelkreislauf (100) nach einem der vorhergehenden Ansprüche,
**dadurch gekennzeichnet,**
**dass** im Basiskreislauf (10) außerhalb des wärmeisolierten Hilfskreislaufes (30) oder im Basiskreislauf (10) in einer gemeinsamen Leitung (I) mit dem wärmeisolierten Hilfskreislauf (30) ein Kühler (16) vorgesehen ist, der in Strömungsrichtung des Kühlmittels gesehen stromabwärts nach der Batterie (12) angeordnet ist.

5. Heiz- oder Kühlmittelkreislauf (100) nach einem der vorhergehenden Ansprüche,
**dadurch gekennzeichnet,**
**dass** der Basiskreislauf (10) und der wärmeisolierte Hilfskreislauf (30) eine gemeinsame Leitung (I) aufweisen,
durch welche nur die Batterie (12) durchströmt wird
oder durch welche nur die Batterie (12) und ein Kühler (16) durchströmt werden.

6. Heiz- oder Kühlmittelkreislauf (100) nach einem der vorhergehenden Ansprüche,
**dadurch gekennzeichnet,**
**dass** der wärmeisolierte Hilfskreislauf (30) eine Funktionsleitung (II) aufweist, durch welche mindestens eines der folgenden Elemente (31, 32, 33) durchströmt wird: eine Hilfspumpe (31), eine Elektroheizung (32), und/oder ein Zwei-Wege-Ventil (33).

7. Heiz- oder Kühlmittelkreislauf (100) nach einem der vorhergehenden Ansprüche,
**dadurch gekennzeichnet,**
**dass** im Basiskreislauf (10) ein Wärmeübertrager (18) angeordnet ist, um die Abwärme des Elektromotors (11) und/oder der Batterie (12) in eine Fahrzeugkabine (K) zu übertragen,
und/oder dass ein Wärmeübertrager (18) im Basiskreislauf (10) in Flussrichtung des Kühlmittels gesehen stromabwärts nach der Batterie (12) und nach der Bypassleitung (20) angeordnet ist,
und/oder dass der Basiskreislauf (10) eine Übertragungsleitung (10a) aufweist, in welcher ein Wärmeübertrager (18) angeordnet ist.

8. Elektrofahrzeug (1) mit einem Heiz- oder Kühlmittelkreislauf (100) nach einem der vorhergehenden Ansprüche.

9. Elektrofahrzeug (1) nach dem vorhergehenden Anspruch,
**dadurch gekennzeichnet,**
**dass** ein Heiz- oder Kältemittelkreislauf (200) zum Temperieren einer Fahrzeugkabine (K) vorgesehen ist,
wobei der Heiz- oder Kühlmittelkreislauf (100) zum Temperieren des Elektromotors (11) und/oder der Batterie (12) des Elektrofahrzeuges und der Heiz- oder Kältemittelkreislauf (200) zum Klimatisieren der Fahrzeugkabine (K) thermisch indirekt über einen ersten Luftstrom (L1) verbunden sind.

10. Elektrofahrzeug (1) nach dem vorhergehenden Anspruch,
**dadurch gekennzeichnet,**
**dass** der Heiz- oder Kühlmittelkreislauf (100) einen Kühler (16) aufweist und dass der Heiz- oder Kältemittelkreislauf (200) einen Kompressor (201) aufweist, wobei der Wärmeübertrager (18) und der Kompressor (201) durch einen ersten Luftstrom (L1) durchströmt werden,
und/oder dass ein Gebläse (17) vorgesehen ist, um einen ersten Luftstrom (L1) zu erzeugen.

## Claims

1. Heating medium or coolant circuit (100) for an electric vehicle, having:
a basic circuit (10) for controlling the temperature of an electric motor (11) and of a battery (12) of the electric vehicle,
wherein, in the basic circuit (10), provision is made of main pump (15) for conveying a coolant through the basic circuit (10),
a bypass line (20) for allowing the coolant to flow past the battery (12),
and a thermally insulated auxiliary circuit (30) for the battery (12) for controlling the temperature of the battery (12) independently of the electric motor (11),
**characterized in that,**
in the thermally insulated auxiliary circuit (30), provision is made of an auxiliary pump (31) for conveying the coolant through the thermally insulated auxiliary circuit (30),
and/or
**in that** an auxiliary pump (31) is arranged in the thermally insulated auxiliary circuit (30) downstream of the battery (12), as seen in the flow direction of the coolant, and wherein,
in the basic circuit (10), provision is made a second bypass line (10b), in which a charging unit (14) for the battery is arranged, for allowing the coolant to flow past the electric motor (11).

2. Heating medium or coolant circuit (100) according to Claim 1,
**characterized**
**in that** the thermally insulated auxiliary circuit (30) has an electric heater (32),
and/or in that an electric heater (32) is arranged in the thermally insulated auxiliary circuit (30) downstream of the battery (12), as seen in the flow direction of the coolant.

3. Heating medium or coolant circuit (100) according to either of the preceding claims,
**characterized**
**in that** the thermally insulated auxiliary circuit (30) has a two-way valve (33),
and/or in that a two-way valve (33) is arranged in the thermally insulated auxiliary circuit (30) downstream of the battery (12), as seen in the flow direction of the coolant.

4. Heating medium or coolant circuit (100) according to one of the preceding claims,
**characterized**
**in that**, in the basic circuit (10) outside the thermally insulated auxiliary circuit (30), or in the basic circuit (10) in a line (I) common to it and the thermally insulated auxiliary circuit (30), provision is made of cooler (16) which is arranged downstream of the battery (12), as seen in the flow direction of the coolant.

5. Heating medium or coolant circuit (100) according to one of the preceding claims,
**characterized**
**in that** the basic circuit (10) and the thermally insulated auxiliary circuit (30) have a common line (I)
by way of which only the battery (12) is flowed through
or by way of which only the battery (12) and a cooler (16) are flowed through.

6. Heating medium or coolant circuit (100) according to one of the preceding claims,
**characterized**
**in that** the thermally insulated auxiliary circuit (30) has a function line (II) by way of which at least one of the following elements (31, 32, 33) is flowed through: an auxiliary pump (31), an electric heater (32) and/or a two-way valve (33).

7. Heating medium or coolant circuit (100) according to one of the preceding claims,
**characterized**
**in that**, in the basic circuit (10), there is arranged a heat exchanger (18) for transferring the waste heat of the electric motor (11) and/or of the battery (12) into a vehicle cabin (K),
and/or in that a heat exchanger (18) is arranged in the basic circuit (10) downstream of the battery (12) and downstream of the bypass line (20), as seen in the flow direction of the coolant,
and/or in that the basic circuit (10) has a transfer line (10a) in which a heat exchanger (18) is arranged.

8. Electric vehicle (1) having a heating medium or coolant circuit (100) according to one of the preceding claims.

9. Electric vehicle (1) according to the preceding claim,
**characterized**
**in that** provision is made of a heating medium or coolant circuit (200) for controlling the temperature of a vehicle cabin (K),
wherein the heating medium or coolant circuit (100) for controlling the temperature of the electric motor (11) and/or of the battery (12) of the electric vehicle and the heating medium or coolant circuit (200) for air-conditioning of the vehicle cabin (K) are thermally connected indirectly via a first air stream (L1).

10. Electric vehicle (1) according to the preceding claim,
**characterized**
**in that** the heating medium or coolant circuit (100) has a cooler (16), and
**in that** the heating medium or coolant circuit (200) has a compressor (201),
wherein the heat exchanger (18) and the compressor (201) are flowed through by a first air stream (L1), and/or in that provision is made of a blower (17) for generating a first air stream (L1).

## Revendications

1. Circuit (100) de fluide de chauffage ou de refroidissement pour un véhicule électrique, comprenant :
un circuit de base (10) pour la régulation de la température d'un moteur électrique (11) et d'une batterie (12) du véhicule électrique,
une pompe principale (15) prévue dans le circuit de base (10) pour acheminer un fluide de refroidissement à travers le circuit de base (10),
une conduite de dérivation (20) pour faire circuler le fluide de refroidissement devant la batterie (12),
et un circuit auxiliaire isolé thermiquement (30) pour la batterie (12) afin de réguler la température de la batterie (12) indépendamment du moteur électrique (11), **caractérisé en ce que**
une pompe auxiliaire (31) est prévue dans le circuit auxiliaire (30) isolé thermiquement pour acheminer le fluide de refroidissement à travers le circuit auxiliaire (30) isolé thermiquement, et/ou
**en ce qu'**une pompe auxiliaire (31) est disposée dans le circuit auxiliaire (30) isolé thermiquement en aval de la batterie (12), vu dans le sens d'écoulement du fluide de refroidissement, et,
dans le circuit de base (10), il est prévu une deuxième conduite de dérivation (10b) dans laquelle est agencé un chargeur (14) pour la batterie, afin de permettre au fluide de refroidissement de s'écouler le long du moteur électrique (11).

2. Circuit (100) de fluide de chauffage ou de refroidissement selon la revendication 1,
**caractérisé en ce que**
le circuit auxiliaire (30) thermiquement isolé comprend un chauffage électrique (32), et/ou **en ce qu'**un chauffage électrique (32) est disposé dans le circuit auxiliaire (30) thermiquement isolé en aval de la batterie (12), vu dans le sens d'écoulement du fluide de refroidissement.

3. Circuit (100) de fluide de chauffage ou de refroidissement selon l'une quelconque des revendications précédentes,
**caractérisé en ce que**
le circuit auxiliaire (30) thermiquement isolé comprend une vanne à deux voies (33), et/ou **en ce qu'**une vanne à deux voies (33) est agencée dans le circuit auxiliaire (30) thermiquement isolé en aval de la batterie (12), vu dans le sens d'écoulement du fluide de refroidissement.

4. Circuit (100) de fluide de chauffage ou de refroidissement selon l'une quelconque des revendications précédentes,
**caractérisé en ce que**
un appareil de refroidissement (16) est prévu dans le circuit de base (10) à l'extérieur du circuit auxiliaire (30) thermiquement isolé ou dans le circuit de base (10), dans une conduite (I) commune avec le circuit auxiliaire (30) thermiquement isolé, lequel est agencé en aval de la batterie (12), vu dans le sens d'écoulement du fluide de refroidissement.

5. Circuit (100) de fluide de chauffage ou de refroidissement selon l'une des revendications précédentes,
**caractérisé en ce que**
le circuit de base (10) et le circuit auxiliaire (30) thermiquement isolé comprennent une conduite commune (I), par laquelle seule la batterie (12) est traversée ou par laquelle seuls la batterie (12) et un appareil de refroidissement (16) sont traversés.

6. Circuit (100) de fluide de chauffage ou de refroidissement selon l'une des revendications précédentes,
**caractérisé**
**en ce que** le circuit auxiliaire (30) thermiquement isolé comporte une conduite fonctionnelle (II) parcourue par au moins un des éléments suivants (31, 32, 33) : une pompe auxiliaire (31), un chauffage électrique (32), et/ou une vanne à deux voies (33).

7. Circuit (100) de fluide de chauffage ou de refroidissement selon l'une des revendications précédentes,
**caractérisé**
**en ce qu'**un échangeur de chaleur (18) est agencé dans le circuit de base (10) pour transférer la chaleur perdue du moteur électrique (11) et/ou de la batterie (12) dans un habitacle de véhicule (K),
et/ou en ce qu'un échangeur de chaleur (18) est agencé dans le circuit de base (10) en aval de la batterie (12) et en aval de la conduite de dérivation (20), vu dans le sens d'écoulement du fluide de refroidissement,
et/ou en ce que le circuit de base (10) comporte une ligne de transmission (10a) dans laquelle est agencé un échangeur de chaleur (18).

8. Véhicule électrique (1) comprenant un circuit (100) de fluide de chauffage ou de refroidissement selon l'une quelconque des revendications précédentes.

9. Véhicule électrique (1) selon la revendication précédente,
**caractérisé**
**en ce qu'**un circuit de chauffage ou de refroidissement (200) est prévu pour la régulation de la température d'un habitacle (K) du véhicule,
le circuit (100) de fluide de chauffage ou de refroidissement pour tempérer le moteur électrique (11) et/ou la batterie (12) du véhicule électrique et le circuit de chauffage ou de refroidissement (200) pour climatiser l'habitacle (K) du véhicule étant reliés thermiquement de manière indirecte par un premier flux d'air (L1).

10. Véhicule électrique (1) selon la revendication précédente,
**caractérisé**
**en ce que** le circuit (100) de fluide de chauffage ou de refroidissement comprend un appareil de refroidissement (16) et
**en ce que** le circuit de chauffage ou de refroidissement (200) comprend un compresseur (201), l'échangeur de chaleur (18) et le compresseur (201) étant traversés par un premier flux d'air (L1),
et/ou en ce qu'un ventilateur (17) est prévu pour générer un premier flux d'air (L1).
